# EUROPÄISCHE PATENTSCHRIFT

(11) **EP 0 980 854 B1**
(45) Veröffentlichungstag und Bekanntmachung des Hinweises auf die Patenterteilung: **24.10.2007**
(21) Anmeldenummer: 99115569.8
(22) Anmeldetag: 06.08.1999
(51) Int. Cl.: C04B 28/02

(54) **Hydraulisch bindender Fugenmörtel für Pflasterflächen**
Hydraulically setting joining composition for paving surfaces
Composition de joint à prise hydraulique pour pavés

(30) Priorität: 18.08.1998 DE 19837326
(43) Veröffentlichungstag der Anmeldung: 23.02.2000
(73) Patentinhaber: Krug-Becker, Doris, 53578 Windhagen (DE)
(72) Erfinder: Krug-Becker, Doris, 53578 Windhagen (DE)
(74) Vertreter: Geitz, Holger

(56) Entgegenhaltungen:
- CH-A- 685 874
- US-A- 2 662 024
- DATABASE WPI Section Ch, Week 197725 Derwent Publications Ltd., London, GB; Class L02, AN 1977-44116Y XP002123277 & JP 52 056132 A (ONODA CEMENT CO LTD), 9. Mai 1977 (1977-05-09)
- PATENT ABSTRACTS OF JAPAN vol. 015, no. 105 (M-1092), 13. März 1991 (1991-03-13) & JP 03 002459 A (INAX CORP), 8. Januar 1991 (1991-01-08)
- PATENT ABSTRACTS OF JAPAN vol. 016, no. 329 (C-0963), 17. Juli 1992 (1992-07-17) & JP 04 093384 A (NISSAN MOTOR CO LTD), 26. März 1992 (1992-03-26)

## Beschreibung

Die Erfindung bezieht sich auf einen hydraulisch bindenden Fugenmörtel zum Verfüllen der Fugen von Pflasterflächen, bei denen es sich um Pflasterungen aus Natur- oder Betonsteinen sowie aus Klinker oder auch Belagplatten aus derartigen Materialien handeln kann.

Bei verkehrsmäßig belasteten und/oder starker Reinigung unterworfenen Straßen-, Wege- oder Platzbefestigungen besteht bei konventioneller Verlegung des Belagmaterials in Sand- oder Sand-/Splittgemischen wegen deren mangelnder Stand- und Tragfähigkeit die Gefahr, daß derartige Verkehrsflächen vorzeitig durch den Verlust von Fugenmaterial und/oder sich lockerndes Belagmaterial ausfällig werden.

Um dem entgegen zu wirken, sind zum Verschließen der Fugen zwischen benachbarten Belagelementen bereits Kunststoffmörtel und hydraulisch bindende Mörtel eingesetzt worden. Derartige Mörtel haben sich für den genannten Zweck jedoch als nicht befriedigend erwiesen.

Kunststoffmörtel sind nicht nur erheblich teurer als hydraulisch bindende Mörtel, sondern wegen ihrer kurzen Abbindezeiten auch verarbeitungsmäßig problematisch. Insbesondere gilt dies bei der Verarbeitung in Nässe. Dabei treten schlechte Festigkeitswerte auf und die Flankenhaftung an den Belagelementen reduziert sich merklich.
Bei niedrigen Temperaturen verändern sich die Abbindegeschwindigkeiten erheblich.

Kunststoffmörtel schrumpfen beim Abbinden. Dies impliziert immer das Risiko des Abreißens von den Belagelementflanken. Schließlich haben Kunststoffmörtel sehr schlechte Fließeigenschaften, wodurch das Verfüllen enger Verfugungsräume höchst problematisch ist.

Hydraulisch bindende Mörtel sind zwar problemlos auf die notwendige Festigkeit von größer 40 N/mm² einstellbar, haben dann aber einen Elastizitätsmodul größer 25.000 N/mm² und sind als Verfugungsmaterialien für Straßenpflasterungen zu starr. Andererseits ist bei akzeptabler Elastizität die erreichbare Festigkeit nicht ausreichend. Auch erreichen hydraulisch bindende Mörtel nicht die erforderliche Frost-/Tauwetterbeständigkeit und derartige Mörtel sind taumittelempfindlich.

Bei hydraulisch bindenden Mörteln ist eine hohe Elastizität erforderlich, um infolge der an den freiliegenden Oberflächen der Belagelemente auftretenden Temperaturschwankungen Wärmedehnungen in den Fugen selbst zu kompensieren. Andernfalls müßten in die Beläge Dehnfugen eingebracht werden, die aber nicht hinreichend belastbar sind.

Eine besonders wichtige Forderung an derartige Fugenmörtel besteht darin, daß beim Abbinden keine Flankenabrisse auftreten dürfen, weil dadurch einerseits der Verband geschwächt wird und andererseits Wasser in die Abrisse eindringt, was unter Frosteinwirkung zu nachhaltigen Schäden des Pflasterverbandes führen kann.

Demgemäß soll durch die Erfindung ein hydraulisch bindender Fugenmörtel der vorgenannten Art und Zweckbestimmung im Hinblick auf seine Brauchbarkeit zum Verfugen von Pflasterflächen verbessert werden.

Gelöst ist diese Aufgabe dadurch, daß der Fugenmörtel, der Zuschlagstoffe, wie Quarzsand, Naturstein-Brechsande und/oder Splitte mit vorgegebener Siebline einer ausgewählten Körnung, und mineralisch/hydraulisch bindende Anteile, wie Zement, Mikrosilika, Flugasche und/oder Kalk, umfaßt, nach der Lehre des Patentanspruchs 1 mit Tensiden modifiziert ist, bei denen es sich um nichtionische Substanzen aus der Gruppe der quaternären Ammoniumverbindungen handelt, die dem Anmachwasser zugesetzt werden.

Aus der Database WPI, Accession Number 1977-44116Y [25] ist bereits ein Mörtel vorbekannt, der neben mineralischen Zuschlagstoffen einer vorgegebenen Sieblinie als bindende Anteile Portland-Zement und Calciumoxid sowie ein Tensid enthält, aber dieser Mörtel ist zum Ausbessern von Schadstellen und insbesondere zum Verschließen von Rissen in Silowänden bestimmt. Dieser Mörtel vermag nicht die an Fugenmörtel für Pflasterungen aus Natur- oder Betonstein, Klinkern oder Belagplatten aus derartigen Materialien zu stellenden Anforderungen zu erfüllen. Auch sind der genannten Druckschrift keinerlei Hinweise auf die gezielte Verwendung spezieller Tenside, die erfindungsgemäß dem Anmachwasser zugesetzt werden, zu entnehmen.

Bekannt ist auch schon aus der CH-PS 300 854 ein Verfahren zum Herstellen von Mörtel oder Beton, bei dem höhere aliphatische Kohlenwasserstoffketten enthaltende Sulphonsäuren oder deren Salze als Plastifizierungsmittel mit oberflächenspannungsmindernder Wirkung verwendet werden. Neben einer plastifizierenden Wirkung soll dies zu einer Verbesserung der Festigkeitseigenschaften und der Wasserundurchlässigkeit führen.

Demgegenüber handelt es sich bei der Erfindung um einen mit Tensiden modifizierten Fugenmörtel, der sich hauptsächlich auszeichnet durch
- eine Absenkung des Elastizitätsmoduls,
- eine Kompensation der Abbindeschwindung,
- eine Rundporenbildung zum Erreichen der erforderlichen Frost-/Taumittelbeständigkeit,
- eine Verbesserung des Fließverhaltens in der Plastifizierungsphase,
- eine Beschleunigung der Abbindegeschwindigkeit nach dem Einbringen in Fugen und
- verbesserte Flotationseffekte und damit ein erleichtertes Säubern der Belagoberfläche nach dem Verfugen.

Zur Modifizierung des erfindungsgemäßen Fugenmörtels sind alle nichtionischen Tensides aus der Gruppe der quatärneren Ammoniumverbindungen geeignet.

Eine erfindungstypische Mörtelzusammensetzung kann etwa folgende Rezeptur aufweisen:
- 70 - 80 GEW/Prozent mineralischer Zuschlagstoffe (wie Quarzsand) der Körnung 0 bis 2 mm oder auch 0 bis 4,0 mm
- 20 - 30 GEW/Prozent mineralisch/hydraulisch bindende Anteile, (wie Zement, Mikrosilika, Flugasche und/oder Kalk)-Tensid in 0,5 bis 3,5 VOL/Prozent der Trockenmasse oder dem Anmachwasser zugesetzt.

Durch die Erfindung ist ein für die eingangs angegebene Zweckbestimmung hervorragend geeigneter Fugenmörtel geschaffen worden, bei dem das Tensid nach dem Einbringen des Mörtels in die Fuge in einer abbindebeschleunigenden Konzentration vorliegt. An der Oberfläche wird die Konzentration durch reichliche Wasserzugabe unmittelbar stark abgesenkt und die Fugenmasse erstarrt früher als das überschüssige Material, das auf der Belagoberfläche anzutreffen und nach dem Verfugen zu entfernen ist. Dadurch ist sichergestellt, daß bei der Abreingung einer verfugten Belagoberfläche die Fuge schon verfestigt ist und nicht durch den mit reichlicher Wasserzugabe verbundenen Reinigungsvorgang ausgewaschen oder ausgemagert wird. Bei der Reinigung selbst sind die Tenside in ihrer verminderten Konzentration hilfreich als Folge der verminderten Oberflächenspannung des Reinigungswassers durch Schaumbildung in feine Partikel des Zementleims abzuflotieren.

## Patentansprüche

1. Hydraulisch bindender Fugenmörtel für Pflasterflächen, wie Pflasterflächen aus Natur- oder Betonsteinen, Klinkern oder Belagplatten aus derartigen Materialien, der mineralische Zuschlagstoffe, wie Quarzsand oder Natursteinbrechsande bzw. Splitt, mit vorgegebener Sieblinie einer ausgewählten Körnung, und mineralisch/hydraulisch bindende Anteile, wie Zement, Mikrosilika, Flugasche und/oder Kalk, umfaßt,
**dadurch gekennzeichnet, daß** der Fugenmörtel mit Tensiden modifiziert ist, bei denen es sich um nichtionische Substanzen aus der Gruppe der quaternären Ammoniumverbindungen handelt, die dem Anmachwasser zugesetzt werden.

## Claims

1. Hydraulically setting pointing mortar for paving surfaces, such as paving surfaces of natural or concrete blocks, bricks or covering plates of materials of that kind, which comprise mineral ballasts such as quartz sand or natural stone crushed sand or stone chippings with predetermined grading curve of a selected grain size, and mineral/hydraulically-binding components such as cements, microsilicas, fly ash and/or lime, **characterised in that** the pointing mortar is modified by surfactants which are nonionic substances from the group of quaternary ammonium compounds, which are added to the mixing water.

## Revendications

1. Mortier pour joints à prise hydraulique pour surfaces pavées, comme des surfaces pavées à base de pierres naturelles ou de pierres de béton, de clinkers ou de plaques de revêtement à base de tels matériaux, qui comprend des additifs minéraux, comme du sable de quartz ou des sables de broyage de pierre naturelle ou des gravillons, avec une ligne de tamisage prédéfinie d'une granulation choisie, et des fractions à prise minérale/hydraulique comme du ciment, des microsilices, de la cendre volante et/ou du calcaire,
**caractérisé en ce que** le mortier à joints est modifié avec des agents tensioactifs, pour lesquels il s'agit de substances non ioniques provenant du groupe des composés d'ammonium quaternaires, qui sont ajoutés à l'eau de gâchage.
